# EUROPEAN PATENT SPECIFICATION

(11) **EP 2 731 297 B1**
(45) Date of publication and mention of the grant of the patent: **22.01.2020**
(21) Application number: 13192452.4
(22) Date of filing: 12.11.2013
(51) Int. Cl.: H04L 12/28, H04L 29/08, G06F 3/048

(54) **METHOD FOR TRANSMITTING USER INTERFACE**
VERFAHREN ZUR BENUTZERSCHNITTSTELLEÜBERMITTLUNG
PROCÉDÉ DE TRANSMISSION D'INTERFACE UTILISATEUR

(30) Priority: 12.11.2012 GB 201220359; 30.04.2013 KR 20130048825
(43) Date of publication of application: 14.05.2014
(73) Proprietor: Samsung Electronics Co., Ltd., Gyeonggi-do 443-742 (KR)
(72) Inventor: Alder, Christopher, Staines, Middlesex TW18 4QE (GB); Naughton-Green, Jonathan, Staines, Middlesex TW18 4QE (GB)
(74) Representative: Appleyard Lees IP LLP

(56) References cited:
- US-A1- 2003 208 595
- US-A1- 2009 180 398
- US-A1- 2011 119 346
- TATSUO NAKAJIMA ET AL: "A software infrastructure for supporting spontaneous and personalized interaction in home computing environments", PERSONAL AND UBIQUITOUS COMPUTING, SPRINGER VERLAG, LO, vol. 10, no. 6, 10 November 2005 (2005-11-10), pages 379-391, XP019444516, ISSN: 1617-4917

## Description

### BACKGROUND

### 1. Field

Example embodiments of the present disclosure relate to a method and a computer-readable storage medium for enabling a first device to present a user interface on a second device.

### 2. Description of the Related Art

An increasing number of devices within the home or office are being interconnected via local networks. This interconnection may be used to allow one device to be controlled by a second device. This may be used to provide user control of one device, via a user interface on the other. The Universal Plug and Play (UPnP) standard is one example of a standard which allows for equipment to interconnect.

Under the UPnP standard, compatible devices are configured to automatically connect to a network (such as a home network), and to discover other devices that are also connected to the network. This discovery is performed using the Simple Service Discovery Protocol (SSDP), which enables the devices to advertise their presence on the network so that they can be discovered by other devices, and equally to discover these other devices themselves.

In accordance with the SSDP protocol a discovery message may be sent by a first device. This discovery message contains a link to an Extensible Markup Language (XML) file containing further information about the first device. A second device may use this link to retrieve the XML file and thereby retrieve information about the first device.

However, this process is limited in the functionality which can be provided to enable devices to connect.

Tatsuo Nakajima et al "A software infrastructure for supporting spontaneous and personalized interaction in home computing environments" describes a personal home server which allows a user to coordinate home appliances. US2009/180398 describes a network in which a presentation device receives a service application associated with a source device. US2003/208595 describes a proximity framework which allows users of mobile computing devices to dynamically access services and applications in a given geographic area. US2011/119346 describes a method and apparatus by which a remote user interface (Ul) client device provides a remote UI service. An event message which includes a URL for accessing a UI resource is sent from a remote UI server device to the remote UI client device.

### SUMMARY

In accordance with at least one example embodiment, methods are provided for supporting or implementing functionality for enabling a first device to present a user interface on a second device. This is achieved by a combination of features recited in each independent claim. Further features are set out in the dependent claims.

Additional aspects and/or advantages will be set forth in part in the description which follows and, in part, will be apparent from the description, or may be learned by practice of the invention.

We describe a method for enabling a first device to present a user interface on a second device, the first and second devices being able to communicate via a network, the method including: detecting a change in an operational state of the first device; responsive to the detecting, sending a message from the first device, the message identifying computer readable instructions stored on the first device; receiving the message at second device; responsive to the receiving, retrieving the computer readable instructions from the first device; and using, by the second device, the computer readable instructions whereby to present a user interface at the second device, at least a part of the user interface being determined by the computer readable instructions retrieved from the first device.

In a universal plug and play (UPnP) system, a discovery process may be used to enable a second device to identify and learn about a first device. Following this discovery process, a second device may be configured to connect to a first device, for example by downloading software from the internet, and thereby be able provide a user interface for the first device. However, such systems not only require the second device to be pre-configured, but require a user to request the user interface at the second device before the two devices can connect.

There may be benefits to be gained from providing a method by which a first device may cause a user interface to be presented on the second device without pre-configuration, and without the user having to request the user interface at the second device. This enables, for example, the first device to provide an alert on the second device without pre-configuration, something which is not possible with the general UPnP systems.

Accordingly, when a state change is determined at the first device, a message is sent. This message, when received by the second device, enables the second device to retrieve computer readable instructions from the first device. These computer readable instructions may subsequently be used to present a user interface.

Therefore, the system provides a number of advantages. First, the first device is able to cause a user interface to be presented on the second device without pre-configuration. Secondly, by having the message identify computer instructions at the first device, the message itself may be kept in a standardized format, irrespective of the type of first device sending the message, thus ensuring wide ranging compatibility and ensuring that any non-compatible second device is not caused to error.

To put the present disclosure into context, an example of the first device may be a mobile telephone, and the change in operating state may be associated with an incoming call. The second device may be a television. As such, when the incoming call is detected, the mobile telephone may send a message to the television. This message may cause the television to retrieve computer readable instructions from the mobile telephone, which in turn may cause the television to present a user interface alerting a user watching the television to the call. Significantly, this alert is possible despite the television not being pre-configured to e.g. interface with the mobile telephone.

The message may identify a network location from which the computer readable instructions may be retrieved by the second device. To enable the computer readable instructions to be used by the second device, the message may identify a network location from which the second device may retrieve the computer readable instructions. This means that the second device is able to handle the received message in a standardized manner - by retrieving the computer readable instructions and presenting a user interface determined by the instruction. This further ensures that network traffic is kept low, as any device in receipt of the message which is unable or unwilling to use the computer readable instructions may ignore the message, and therefore will not retrieve the computer readable instructions.

The computer readable instructions may include an application, which is executable on the second device. Advantageously, the computer readable instructions may provide an application which may be executed on the second device. To enable this, the second device may be configured with an application environment in which such applications may be executed. Being an application, the computer instructions may be contrasted with, for example, a webpage, in that the instructions may be executed on the second device without the second device having to repeatedly retrieve information from the first device.

The method includes using, by the second device, the computer readable instructions whereby to send at least one control message to the first device. The method further includes receiving, at the first device, a said control message, and causing an operating state of the first device to change based on the received control message.

The computer readable instructions not only cause a user interface to be presented, but additionally enable the second device to send control messages to the first device. Therefore, a user may use the user interface to control the first device. The control messages may be specified by the computer readable instructions, that is the format and content of the messages may be defined by the instructions. Continuing the example above, the control messages may contain, for example, an ignore command which causes the mobile telephone to ignore the incoming call and, for example, divert the call to voicemail.

The method may include configuring, by the first device, the message based on an operating state of the first device. Alternatively or additionally, the method may include configuring, by the first device, the computer readable instructions, based on an operating state of the first device.

In some embodiments, the first device may send information to the second device such that the user interface accurately represents a state of the first device. In some embodiments, the message identifying the computer readable instructions may be configured to convey such information. This may be done by having the message contain a control parameter to be input into generalized computer instructions, alternatively, the message may identify a different set of computer instructions based on the operating state. In other embodiments, the message may not be changed, and the computer readable instructions may be configured appropriately before being sent to the second device. The second and third options enable the first device to efficiently convey e.g. an alert, as only the instructions required to display the particular alert need to be sent as part of the computer readable instructions. As such, in view of the example above, the computer readable instructions sent in relation to an incoming call may be different from those for an incoming message.

The first device may be configured to act as a server on the network, and the computer readable instructions cause the second device to act as a client to the server. Despite the first device initiating communications, i.e. by sending the message including information identifying an application to the second device, the resultant arrangement between the first and second devices may be one in which the first device provides the functionality of a server and the second device provides the functionality of the client.

The method may include multicasting the message by the first device. The message may be sent using a Simple Service Discovery Protocol (SSDP). The message may be multicast on the network. In particular the message may be multicast to all devices on the network; this may be done without prior knowledge of what devices are on the network, for example by sending the message to a particular address. In the UPnP protocol, a message sent to IP address 239.255.255.250 on port 1900 will be multicast to all devices on the network. Multicasting the message reduces the signaling required by the first device prior to sending the message. In some embodiments the message may be sent using SSDP, i.e. the same protocol used to send discovery messages in UPnP. As such, a new form of message is proposed.

The method may include conducting, by the first device, a discovery process on the network whereby to identify said second device, and sending the message to the second device based on the discovery process. In some embodiments, the first device may identify particular second devices on the network using a discovery process. This may be used to direct the message to compatible devices.

The method may include sending, by the first device, a discovery message, the discovery message being sent before the said message. The discovery message may identify a network location of information describing the first device. The information describing the first device may include an XML formatted document. In some embodiments, the first device may send, in addition to the said message, a discovery message. This discovery message may be in accordance with the UPnP specification, and may accordingly identify an XML file containing information describing the first device. As such, it will be apparent that the said message is separate, and distinct, from a UPnP discovery message. Thus the discovery message enables the first device to be identified in the UPnP system, but the said message enables the first device to instigate the presentation of a user interface.

The sending of the message by the first device may be performed independently from any messages received by the first device from the second device. The receiving of the message may be performed independently from any messages sent to the first device by the second device. The method may include detecting a plurality of changes in an operational state of the first device; and sending a plurality of said messages to the second device responsive to the detecting. The message is sent by the first device without the information contained within it being requested by the second device. As such, the message is pushed to the second device. This can be contrasted with prior art systems, in which a second device must instigate communications with the first device, any request data from the first device. This provides the benefit that the first device is able to provide, for example, alerts. A plurality of these messages may be sent, each in relation to a given change in state. Therefore the messages may be contrasted with a discover message, which will only be sent once to a given second device.

The method may include receiving, at the second device, a first said message; presenting, at the second device, a prompt for user input upon receipt of the first message, the prompt requesting permission to retrieve the computer readable instructions; and based upon user input providing permission, retrieving and using computer readable instructions for the first and any subsequent said messages.

When a first message identifying computer readable instructions is received, the second device may present a prompt for permission to use the computer instructions. This may be useful for security purposes. However, having given permission, the second device may subsequently automatically user computer instructions as identified by any subsequent messages. Therefore the above method is able to quickly and easily display subsequent user interfaces, e.g. to provide alerts.

The method may include storing an indication of the user input in memory. The second device may store an indication of the user input in the memory. Therefore, the second device may be able track the permissions relating to a number of different first devices.

At least a part of the network may include a home network.

We also describe a method of enabling a first device to present a user interface on a remote device according to claim 14.

The method may further include operating, at the second device, a service whereby to forward messages sent between the first device and the remote device.

Instead of using the computer readable instructions on the second device, the instructions of this embodiment are may forwarded to a remote device. The remote device is set to subsequently receive and use the instructions. This has the advantage that the first device does not need to establish a connection to the remote device to be able to communicate with the remove device. This has particular advantages when there are a plurality of first devices, as only the second device needs to establish the connection. To facilitate the provision of the user interface, the second device may provide a service to forward messages between the first device and the remote device.

We also describe a method for enabling a first device to present a user interface on a second device, the first and second devices being able to communicate via a network, the method including: detecting a change in an operational state of the first device; responsive to the detecting, sending a message from the first device, the message identifying computer readable instructions stored on the first device; and enabling the identified computer readable instructions to be retrieved from the first device, wherein the computer readable instructions are usable by the second device whereby to present a user interface at the second device, at least a part of the user interface being determined by the computer readable instructions retrieved from the first device.

We also describe at least one computer program product according to claim 15.

Further features and advantages will become apparent from the following description of preferred embodiments, given by way of example only, which is made with reference to the accompanying drawings.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 illustrates a diagram of a system, according to example embodiments of the present disclosure;
FIG. 2 illustrates a diagram of components of a first device within the system of FIG. 1, according to example embodiments of the present disclosure;
FIG. 3 illustrates a diagram of components of a second device within the system, according to example embodiments of the present disclosure;
FIG. 4 illustrates a flow of messages, according to example embodiments of the present disclosure;
FIG. 5 illustrates a flow of messages, according to other example embodiments of the present disclosure; and
FIG. 6 illustrates a flow of messages including a remote device, according to yet another example embodiment of the present disclosure.

Some parts, components and/or steps of the embodiments appear in more than one drawing. For the sake of clarity, the same reference numeral will be used to refer to the same part, component or step in all of the drawings.

### DETAILED DESCRIPTION

Reference will now be made in detail to the embodiments, examples of which are illustrated in the accompanying drawings, wherein like reference numerals refer to the like elements throughout. The embodiments are described below to explain the present invention by referring to the figures.

Example embodiments of the present disclosure provide systems, devices and methods for enabling a first device to control a second device. So that embodiments of the present disclosure may be better understood, the following exemplary embodiments will be described in the context of a typical home network (a local network) connected to the internet. However, it will readily be appreciated that this context is not intended to be limiting on the claims.

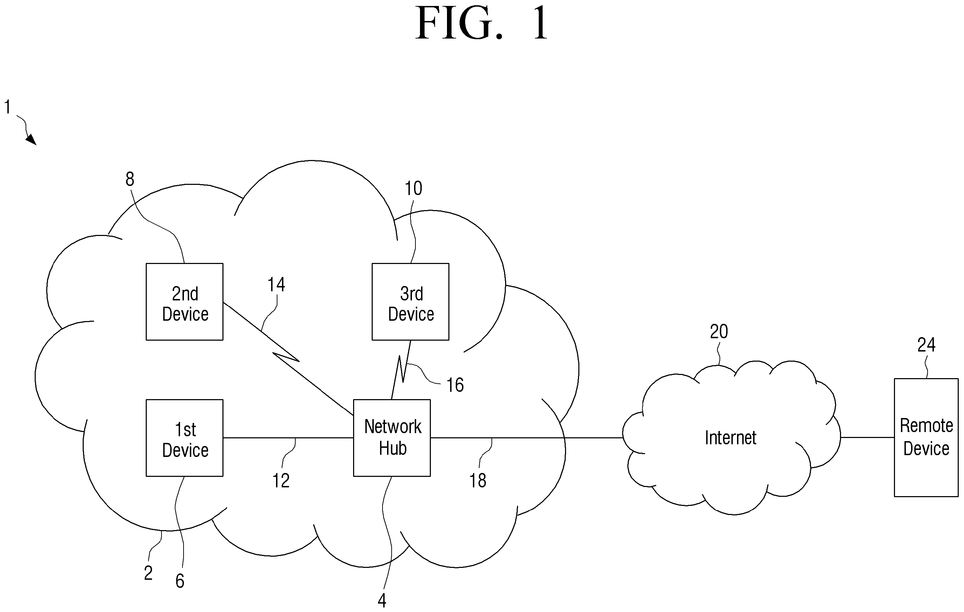

As shown in FIG. 1, a communications system 1 includes a local, or home, network 2. Within the local network 2 is a network hub 4. Devices 6, 8 and 10 are each connected to the hub 4 by connections 12, 14 and 16. The hub is also connected, via connection 18, to the internet 20. A remote device 24 is connected to the internet 20, and via the internet 20 may communicate with the local network 2 and the devices within the local network 2.

The hub 4 may correspond to a typical home network hub, sometimes known as a homehub, home router, modem router, WiFi hub or the like. The hub may include a number of known functional elements, such as: a modem; a Dynamic Host Configuration Protocol (DCHP) server; a Network Address Translation (NAT) server; a wireless, or WiFi, access point; and an Ethernet switch, and the like. These elements, and their purpose, are known in the art and will not be described in detail. Nonetheless, it will be understood that the hub 4 provides each device 6, 8 and 10 with a network address within the network 2, and enables the devices to communicate with each other, and with the internet 20. The hub 4 may itself be compatible with Universal Plug and Play (UPnP) standards, and may therefore be included in the signaling described below. As such, the hub 4 may also be described as a device 4 on the network 2.

Devices 6, 8 and 10 are all connected to the hub 4 via connections 12, 14 and 16, and are able to communicate with the hub 4, with each other, with the internet 20, and with the remote device 24 via the internet. Some or all of these connections may be wireless, in this example connections 14 and 16 are shown as being wireless (for example via 802.11 - WiFi), and connection 12 is wired (for example via Ethernet). However this is purely exemplary and any appropriate connections may be used.

The devices 6, 8 and 10 may be any suitable network connectable devices. Nevertheless, to provide some context to the devices, in the description below, it will be assumed that first device 6 corresponds to a network connected home automation system providing e.g. heating and ventilation; second device 8 corresponds to a network connected television; and third device 10 corresponds to a mobile telephone with a wireless connection to the local network. It will further be assumed that each of the devices operates according to the Universal Plug and Play (UPnP) standard. Again, the above description of the first device 6, the second device 8, and the third device 10 are examples, and thus, the present disclosure is not limited thereto.

The remote device 24 may be a mobile device such as a smart phone or tablet computer. The use of this element will be described in more detail below.

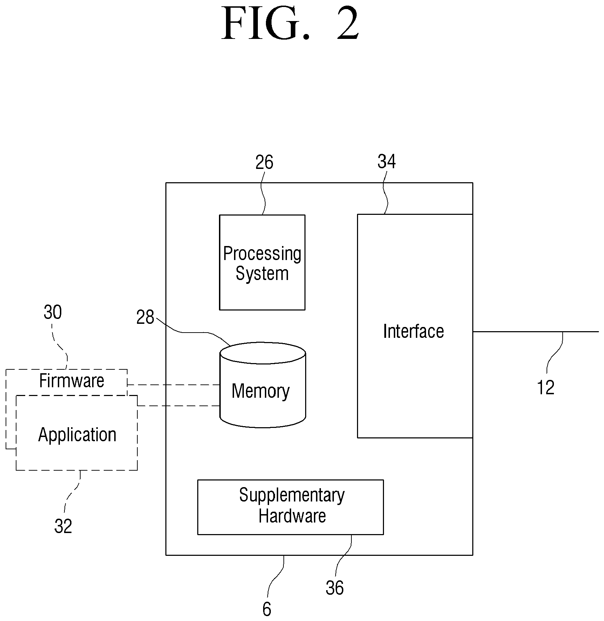

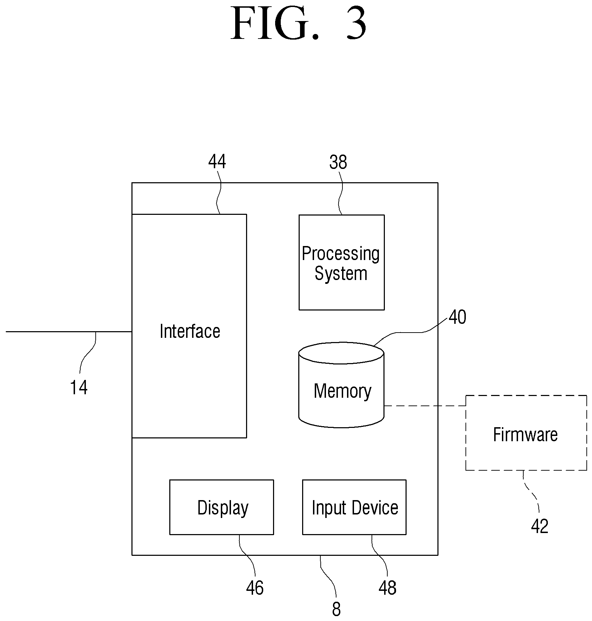

A more detailed view of the devices 6 and 8 (e.g. heating system and television respectively) will now be described with reference to FIGS. 2 and 3.

In FIG. 2, a schematic view of the components of the first device 6 is shown. The first device 6 includes a processing system 26 and a memory 28. Stored within the memory are computer readable instructions, illustrated as firmware 30 and application 32. A network interface 34 enables the first device 6 to communicate via connection 12. Finally block 36 represents supplementary hardware, which may be controlled by the processing system 26. In the current context, this may correspond to e.g. the valves and relays required for the heating system to operate.

The first device 6 may be considered as having a communications module (not shown) which is able to send messages to and receive messages from the other devices, and one or more further modules, where the further modules provide the ancillary functionality of the device, such as heating and lighting control. These modules may or may not be physically separated, that is, may or may not include separate physical elements. However, alternatively or additionally, the modules may be functionally separated, i.e. both modules have functionality provided by the processing system 26.

The processing system 26 may retrieve the computer readable instructions of the firmware 30 from memory 28 and execute the same. In accordance with the computer instructions, the processing system 26 may control the supplementary hardware 36 to cause the desired effect (i.e. heating the home). In so doing, the processing system 26 may send data to, and receive data from, the supplementary hardware 36. The detail of how this is done will be apparent to the skilled person and will be dependent on the nature of the supplementary hardware 36. As such this will not be described in detail. The processing system 26 may also send and receive data via the interface 34, as described below.

FIG. 3 illustrates an exemplary schematic view of the second device 8. In a similar fashion to the first device 6, the second device 8 includes a processing system 38 and memory 40. The memory 40 includes computer readable instructions, shown as firmware 42. Network interface 44 enables the second device 8 to communicate via connection 14. The second device 8, being in this example a television, also includes a display 46 and a user input device 48, such as a remote control.

The processing system 38 may retrieve the computer readable instructions of the firmware 42 from memory 40 and execute the same. In accordance with the computer instructions 42, the processing system 38 may control the display 46 and user input device 48 to provide a user interface at the second device 8. The processing system 38 may further operate to send and receive data via the interface 44.

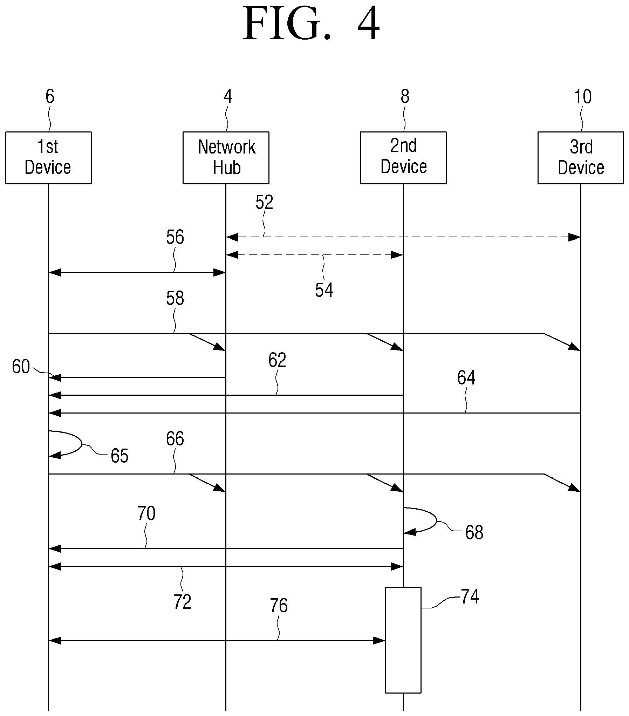

The operation of the devices, in particular devices 6 and 8 will now be described with reference to FIGS. 4 to 6. In the following, for conciseness, the device itself will be described as performing certain steps, such as sending a message, or processing data. It will be appreciated that these steps refer to the processing systems 26 and 38 of the respective devices 6 and 8 performing the requisite steps, in accordance with the computer instructions 30 and 42.

FIG. 4 illustrates a signaling diagram featuring hub 4, and devices 6, 8 and 10. This diagram shows the steps involved in the device 6 (henceforth the first device) connecting to the network 2 and enabling the device 8 (henceforth second device) to present a user interface for the first device 6. Prior the connection of the first device 6 to the network, it is assumed that the devices 8 and 10 have already connected to the network 2. As such, as shown by dashed arrows 52 and 54, the devices 8 and 10 respectively have communicated with hub 4, and have, for example, been assigned network addresses on the local network 2. That is, steps 52 and 54 represent the second device 8 and the third device 10 connecting to network 2 via hub 4.

In step 56, the first device 6 connects to the network 2 by communicating with the hub 4. This step, like steps 52 and 54 above, may involve the hub 4 assigning the first device 6 with a network address such as an IP address.

In the subsequent steps 58 to 64, the first device 6 uses the UPnP discovery process to discover, and enable itself to be discovered by, other UPnP devices connected to the network 2. As such, in step 58, the device multicasts a discovery message via, for example, SSDP to all the devices on the network. This discovery message 58 may contain data about the first device 6. The discovery message 58, as described in the UPnP standard, may also contain a network location, i.e. a URL, of an XML description file which may be used by devices 8 and 10 to retrieve additional information on the first device 6.

In response to the discovery message 58, hub 4, and second device 8 and third device 10 may send each response message shown by arrows 60, 62 and 64. These response messages may be unicast to the sender of the discovery message 58 (i.e. sent to first device 6) and may also contain a network location of a description file which may be used by first device 6 to retrieve additional information on the devices 4, 8 and 10. It will be appreciated here that the hub 4 may also act as a UPnP device.

This discovery process is known in the UPnP standard, and may optionally be performed in addition to the steps below. It will be appreciated, however, that these steps are not essential.

In step 65, the first device 6 determines a change in an operational state of the first device 6. In view of the example system described above, this may be a change in a heating or lighting system - for example the detection of a fault, or a scheduled switch on/off. Other examples are envisaged, and these particular examples should not be considered to be limiting.

In step 66, responsive to the detected change, the first device 6 sends a launch message. In this example embodiment, the message is multicast to all the devices 4, 8 and 10 in the network 2. The message contains at least information identifying application 32, which as described above, is stored in the memory 28 of first device 6. This information identifying the application 32 may be a URL identifying the application and enabling it to be downloaded from the first device 6.

Each of the devices 4, 8 and 10, having received the message sent in step 66, may respond to the message sent in step 66. However, in this example, only the second device 8 will be described as responding. As such in step 68, the second device 8 determines whether to respond to the launch message sent in step 66. This may be done by the second device 8 displaying a prompt on display 46, requesting a user to agree to the second device 8 responding. The user may provide user input agreeing the response, or refuse permission. Alternatively, the second device may be set up to respond automatically, i.e. without a user prompt .Whatever method is used it will be assumed that in step 68 the second device 8 determines that it will respond to the message 66. Again, in other example embodiments, one or more devices may respond.

Subsequently the second device 8 uses the information identifying the application 32 received in message 66 to retrieve the identified application from the first device 6. This is shown as a request sent, in step 70, from the second device 8 to the first device 6 and, a response, sent in step 72 from the first device 6 to be received by the second device 8.

The application 32 contains computer readable instructions which are used by the second device 8 to present a user interface on behalf of the first device on the second device, as in step 74. As part of the use of the computer readable instructions the second device may display a message or screen on the display 46, or provide an audible alert. Moreover, dependent on the instructions in the application, the second device 8 may enable user interaction with the user interface and, based on any user interactions with the user interface, the second device 8, may communicate with - that is, send data to and receive data from - the first device 6. As such, this communication is shown as double ended arrow 76.

It will be appreciated that there are a large number of possibilities for the functionality of the user interface provided by application 32. For example, the application may contain computer instructions which cause the second device 8 to display an alert, without any requirement for a user to respond. Alternatively a more complex user interface may be presented, enabling a user to provide input. The application 32 may thereby cause the second device 8 to send control messages to the first device 6. Since the application may be specific to the first device 6, the user interface may be tailored to the requirements of the first device 6.

To link the above with the system described above, in one example the home automation system may have developed a fault. As such, the application may cause the second device 8 to display an alert identifying this fault. In this example, the application may be relatively simple, and not have any facilities for the user to respond to the alert (other than hiding it once read). In another example, the home automation system may alert the user to a scheduled shutdown of the heating system, and provide a facility for the user to delay this shutdown. In this example, the second device 8 may thus provide a control message to the first device 6 to cause the first device 6 to delay shutdown of the heating.

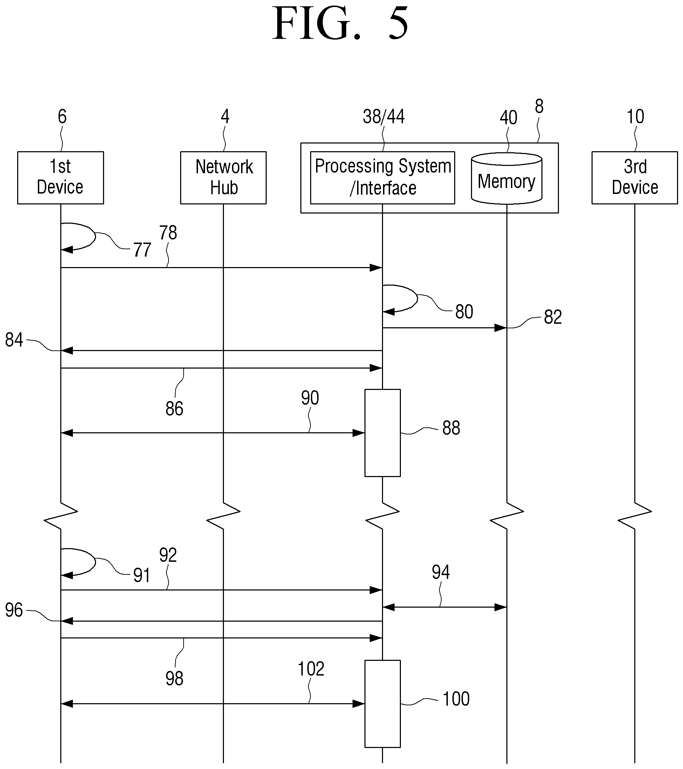

A further method will now be described with reference to FIG. 5. This further method may be considered as an addition, or as an alternative to the above described method. The steps in this method occur after the devices 6, 8 and 10 have connected to the network and performed any discovery process as and if required. In the description below, the second device 8 stores data in its memory 42. To provide a visualization of this the components of second device 8 are separately shown, i.e. the processing system 40 and the interface 46 are shown separately from the memory 42.

In step 77, the first device 6 determines a change in an operating state of the first device 6, and accordingly, in step 78, the first device 6 sends launch message to second device 8. This message may be unicast, in contrast to FIG. 4, where the launch message was multicast. To enable the message to be unicast to the appropriate devices, i.e. second device 8 and not devices 4 and 10, the first device 6 may use information about the devices retrieved as a part of the discovery process. The launch message 78 includes information identifying application 32.

In this example embodiment, the launch message 78 is the first launch message received from the first device 6 by the second device 8. Accordingly, the second device 8 may, in step 80, determine whether to respond to the launch message 78. This may, as described above, be through requesting user permission, which it will be assumed is given. In other example embodiments, the second device 8 may automatically respond.

In step 82, the second device 8 stores an indication of this permission in memory 42. In addition, as shown by steps 84 and 86 the second device 8 requests and retrieves application 32 from first device 6.

As shown by step 88, in a similar manner to step 74 above, the application is used by the second device 8 to provide a user interface. During step 88, the second device 8 and the first device 6 may communicate, as shown by arrow 90. The execution of the application will eventually be terminated. In continuation of the example situation, the change in operating state may be a scheduled shut down in the heating system, and the user, through the user interface shown in step 88, may delay this shut down. Having done this, the user interface may be exited, terminating the application.

Subsequently, in step 91, a further change in operating state for the first device may be determined. This, in the example provided, may be because the delayed shutdown time has been reached, and the home automation system is again alerting the user to the scheduled shutdown. Consequently, based on this determined change in state, the first device 6 may send a second launch message to the second device 8, as shown by step 92.

Like the launch message described above, the second launch message sent in step 96 may include information identifying an application. Upon receipt of the message, in step 94, the second device 8 determines whether user permission has been given for applications provided by the first device 6. This may be done by retrieving stored data from memory 42, as shown in step 94.

The stored user preferences may be used to determine that the application may be executed without further user prompting. As such, in steps 96 and 98 the second device retrieves the application 32 from the first device 6. In step 100, the application is used by the second device 8 to again present a user interface. During this time, further signaling may be performed, as shown by step 102.

The above demonstrates a number of advantages. Firstly, by providing an identifier of an application, which is executable on the recipient second device 8, the first device 6 is able to provide increased functionality through the application. Furthermore, the first device 6 is able to cause the application to be launched through the launch messages. This can be contrasted with the prior art in which the second device 8 has to instigate a connection to first device 6 so as to be able to present a user interface on behalf of the first device. Another advantage is that the first device 6, as shown by step 96, is able to send an alert or other similar notification, without requiring any pre-configuration of the second device 8. Yet another advantage is that for a device, such as first device 6, to provide a user interface on a second device 8, only a single user interaction is required, to give initial permission. Once this is done, the first device 6 may provide a user interface on the second device 8 based on events at the first device 6.

### Additional Details and Modifications

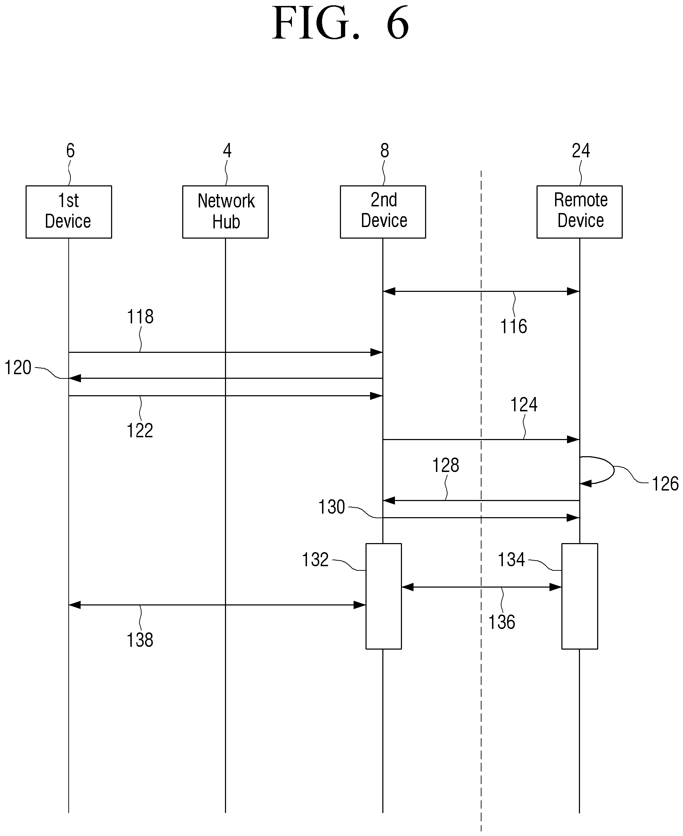

A further set of signaling flows will now be described with reference to FIG. 6. FIG. 6 illustrates a situation where a user interface is to be presented on a remote device 24. This may be done to enable users to remotely access and control the devices in their home. As such, the remote device 24 may be a Smartphone or tablet computer, however, the present disclosure is not limited thereto.

In an initial step 116, the remote device 24 establishes a connection with the second device 8. There are a number of methods by which this can be done. For example, the remote device 24 may be provided with the network address of the second device 8. Alternatively, and in particular where dynamic addressing is used, both the second device 8 and the remote device 24 may communicate with a fixed server, such as a webserver, to report their network addresses. As such, to communicate, either device can interrogate the server to determine the network address of the other. Other methods are known in the art, and will be apparent to the skilled person. Since the remote device 24 is connected to the second device 8, the second device 8 knows that the remote device is willing to receive launch requests. In other example embodiments, the remote device 24 may connect with other devices on the network 2.

In step 118, the first device 6 sends a launch message, identifying application 32. The second device 8 may respond to this message as described above. However, alternatively or additionally the second device 8 may also enable the remote device 24 to respond. As such, the second device 8 retrieves the application 32 from the first device 6. The second device requests the application in step 120, and the application is sent and received in step 122.

In step 124, the second device 8 sends a message to the remote device 124. This message may contain information identifying the application. In step 126, having received message 124, the remote device determines whether it is going to take action upon the receipt of the message 124. As with the above description, this may be through user input or automatically based on predetermined settings.

Having determined that it is going to respond to the message 124, the device retrieves the application 32 from the second device 8. The application 32 is requested by the remote device 24 in step 128 and is sent from the second device 8 in step 130. In step 132, the second device 8 also provides a service, such as a proxy application (different to the application 32), which enables the second device 8 forward messages to and from the first device 6 and remote device 24.

In step 134, the remote device 24 uses the application 32 to provide a user interface. As part of this, the remote device 24 may send data to and receive data from the second device 8. The second device 8, running the proxy application, is able to forward received data onto the first device 6, and equally forward data received from first device 6 to the remote device 24. The resultant communication between the devices 6 and 24, via second device 8, is shown by arrows 136 and 138.

This presents a further advantage, in that the first device 6 requires no special knowledge of the relationship between the remote device 24 and the second device 8. This also means that the first device 6 does not have to be able to communicate with devices outside the local network 2, without being configured to do this. Instead the configuration enabling the communication with a remote device is handled by the second device 8. This is also useful where there is more than one first device, such as first device 6, as all may communicate with the remote device 24, despite only the second device 8 being set up for such a connection.

In the examples provided above, the launch message is sent based on the identification of a change in operating state of the first device 6. It will be appreciated that the change in operating state may be associated with any change in the first device 6, and will depend on the functionality provided by the first device 6. As mentioned above, the first device 6 may be considered to have a communications module (not shown) and at least one further module, and therefore the state change may be associated with one or more of the at least one further module. It will also be appreciated that the state change is independent of any messages which may be received from the second device. That is the launch message is pushed to the second device, and is not sent in response to a request by the second device.

The first device 6 may want to convey specific data to the second device 8, so that the user interface operates in the desired manner - for example presenting the correct alert, and requesting, if required, the desired user input. One method by which this may be done is to have the computer readable instructions of the application 32 stay the same, and for the application, upon being launched, retrieving appropriate information from the first device 6. However, in the alternative, the first device may configure the launch message to contain parameters which are to be used by the application upon launch. The second device may consequently provide the parameters when the application is used. This has the advantage that a single application may be written, simplifying the provision of the application, and at least some of the application to be cached in memory such as memory 42, reducing the amount of data which is transmitted.

In some example embodiments, different launch messages, identifying different applications, may be used. For example, there may be a different application for different alerts, and the launch message which is sent may identify the application which will display the desired alert. These multiple applications may also be cached. In some example embodiments, the first device 6 may configure the application before it is sent to the second device 8, in other words, the identifier provided in the launch message is the same for all situations, however when the application is retrieved by a second device, the first device 6 may deliver a customized application specific to the current operating state of the first device 6. This has the benefit of keeping the application - which is transmitted from the first device 6 to the second device 8 - relatively small, as only the parts required for the current status of the first device 6 are required.

While the above has been described in the context of a home automation system presenting a user interface on a television, many other scenarios are possible. For example, the user interface may alternatively, or additionally, be presented on the mobile telephone 10 (i.e. the third device in FIG. 1). Additionally, the mobile telephone 10 may detect a state change within it, for example, an incoming telephone call, the receipt of a text (SMS) message, an alarm or a calendar reminder. Upon receipt, the mobile telephone 10 may act as the above mentioned first device 6 and send a launch message so an alert is displayed on the television.

The second device 8, and any other device which may execute an application such as application 32, may be provided with a suitable application engine so as to be able to execute the application. Such an application engine may be standardized so that applications from a given device will work on a large number of devices. As an example, there are a number of application engines currently deployed for use on a television, for example, HbbTV, MHEG and MHP. These application engines allow broadcasters to provide interactive television applications. Although a television is only one example of a device which may execute an application, these application engines serve as an example of suitable application engines which may be used in embodiments.

While the above description refers to an application 32, it will be apparent that any form of computer readable instructions may be provided by the first device, and used on the second device to provide a user interface. For example, the application may be provided as a webpage, containing markup data and may also contain scripting instructions such as JavaScript. However, in the alternative, the computer readable instructions may simply be a file defining the text for an alert which is to be displayed, as well as parameters, such as an expiry time for the alert, and which users' responses are acceptable.

At least a part of the user interface may be determined by the application environment on the second device, for example, while any text to show may be defined by the computer readable instructions provided by the first device, the look of the text, such as font size and style, may be defined by the second device. Other arrangements providing a similar separation of features are envisaged.

The launch message described above may be unicast or multicast. In embodiments, the launch message may be sent as a SSDP message multicasted to all connected devices according to the UPnP standard. Alternatively, in other example embodiments, the launch message may be unicast to specific devices. In this case, the discovery process associated with UPnP may be used to determine which devices are suitable or able to receive a launch message.

Any suitable device may be send a launch message, and not simply a home heating device. Other examples include any home device or appliance which may have use of being controlled by a connected device. Some examples of suitable devices are:
- home security systems, which may additionally provide e.g. security footage via the application;
- home automation systems, controlling heating, ventilation, lighting and the like - in these cases the application may not only report on statuses of the system, but allow changes to the configuration of the systems to be made (for example, switch on times, or temperature);

- a home appliance, such as a cooker, microwave, kettle, coffee maker or the like, which may report on status (such as completing a task) via the application;
- a mobile telephone, or home telephone, which may provide an alert for an incoming call, message, dairy appointment, reminder or similar via the application;
- a doorbell, or intercom, such that the user may be alerted to a visitor; and
- a monitoring device, for example for a baby.

The launch message has been described simply as identifying an application, however the launch message may contain other data, including:
- a string identifying the request as a launch request. Although all UPnP compliant devices on the network may receive this request, any non compatible SSDP clients may discard the message based on the identifier;
- the IP address of the remote device;
- the URL identifying the location of the application to launch;
- an device 'friendly name', that is a name which may be used to identify the device to a user;
- an application 'friendly name';
- caching and launching options, for example whether the application should be stored locally on the second device 8; and
- one or more control parameters, which may be provided to the application when it is executed - these may be used to provide an alert to a user, without further messaging.

In the above examples, the devices 4 and 10 did not respond to launch messages. There may be a number of reasons for this, for example, the device 4, being a hub, may not have a user interface system, and therefore will be unable to use the application. The third device 10, being a mobile telephone in the example, may be able to handle launch messages, but have a user setting to reject such requests.

The second device 8 may, upon receipt of a launch message, request user input to authorize the presentation of a user interface. This may be presented, for example, on a screen of the second device 8. In giving permission, the user may specify that user input is required before the application is executed again; alternatively the user may specify that the application may be executed upon the receipt of a launch message. Therefore, the second device 8 may launch the application upon receipt of the launch message, and therefore enable the first device to provide, for example, alerts on the second device.

Multiple first devices, such as first device 6, may be present on the network 2. These first devices may each have a different set of stored user specified parameters in the second device 8. As such, an application associated with one device may launch as soon as a launch message is provided, whereas another application needs to be authorized each time before the application is launched. A further application may be always blocked. A user interface may be provided on the second device 8 to enable a user to change the settings for each known application. In some embodiments, the second device may be set up so that all launch request received on a local network result in automatic (i.e. without user permission) presentation of a user interface, whether or not the launch message was received from a known or a new first device.

The second device 8 may provide a functionality to enable a user to launch the application 32 without a launch message being received from the first device. As such, a user interface may be provided on the second device 8 which enables a user to select and launch an application associated with a desired device. With reference to the examples already provided, this may enable a user to set a temperature via the television.

The first device 6 has been referred to in the singular, however, it may be embodied in a series of distributed elements. Equally, the first device 6 may be a control system for a greater system (such as a heating system), and should not be thought of as including every element of such a system.

The network may be split up into a number of areas or zones. For example in the context of a large house, office or hotel, each room, or floor may be provided with a different zone, and messages may only be sent to devices within the same zone. This prevents a first device alerting an unintended second device.

The hub 4 was referred to in the singular for simplicity, however it will be apparent that the many functions of the hub may be distributed amongst a number of entities.

In some embodiments, the system may be used in, for example, a hotel. As such, the network may be provided with particular zones, and devices may be set up to communicate with specific devices, or specific zones.

It is to be understood that any feature described in relation to any one embodiment may be used alone, or in combination with other features described, and may also be used in combination with one or more features of any other of the embodiments, or any combination of any other of the embodiments.

The embodiments can be implemented in computing hardware (computing apparatus) and/or software, such as (in a non-limiting example) any computer that can store, retrieve, process and/or output data and/or communicate with other computers. The results produced can be displayed on a display of the computing hardware. A program/software implementing the embodiments may be recorded on non-transitory computer-readable media comprising computer-readable recording media. Examples of the computer-readable recording media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW.

Although a few embodiments have been shown and described, it would be appreciated by those skilled in the art that changes may be made in these embodiments without departing from the the invention, the scope of which is defined in the claims.

## Claims

1. A method for displaying a user interface of a first device (6) on a second device (4, 8, 10, 24), the method comprising:
receiving, by the second device (4, 8, 10, 24) from the first device (6), a message containing at least information that identifies computer readable instructions (30, 32) stored in the first device (6);
downloading (70, 72), by the second device (4, 8, 10, 24) from the first device (6), the computer readable instructions (30, 32) of the first device (6) based on the received message ; and
displaying (74), on the second device (4, 8, 10, 24), at least a part of a user interface of the first device (6) determined by the downloaded computer readable instructions (30, 32);
**characterized in that**
the message is received in response to a change in an operation state of the first device (6), wherein the change in operation state comprises a scheduled switch on or a scheduled switch off; and
the computer readable instructions are used to transmit at least one control message from the second device (4, 8, 10, 24) to the first device (6).

2. The method as claimed in claim 1, wherein the message comprises information of an identified location of a network where the computer readable instructions are searched by the second device (4, 8, 10, 24).

3. The method as claimed in claim 1 or claim 2, wherein the computer readable instructions include an application (32) which is executable in the second device (4, 8, 10, 24).

4. The method as claimed in one of claim 1 to claim 3, further comprising:
receiving a first message ;
when the first message is received, displaying a prompt for receiving a user command to search the computer readable instructions; and
searching computer readable instructions regarding the first message and a successive message.

5. A method for transmitting a user interface of a first device (6) to a second device (4, 8, 10, 24) which displays the user interface in the second device (4, 8, 10, 24),
the method comprising:
sensing (65), by the first device (6), a change in an operation state in the first device (6); and transmitting (66), by the first device (6) to the second device (4, 8, 10, 24), a message containing at least information that identifies computer readable instructions (30, 32) stored in the first device (6) in response to sensing the change in the operation state; and
transmitting (72), by the first device (6), the computer readable instructions (30, 32) to the second device (4, 8, 10, 24), wherein the computer readable instructions (30, 32) enable the second device (4, 8, 10, 24) to display at least a part of the user interface of the first device;
**characterized in that**
the sensed change of the operation state comprises a scheduled switch on or a scheduled switch off, the computer readable instructions are used to transmit at least one control message from the second device (4, 8, 10, 24) to the first device (6) and
the control message is configured to change the operation state of the first device (6).

6. The method as claimed in claim 5, wherein the computer readable instructions are set based on the operation state of the first device (6).

7. The method as claimed in claim 5 or claim 6, wherein the first device (6) is set to operate as a server on network, and the computer readable instructions set the second device (4, 8, 10, 24) as a client.

8. The method as claimed in one of claim 5 to claim 7, wherein the message is multicast by the first device (6).

9. The method as claimed in one of claim 5 to claim 8, wherein the message is transmitted as a Simple Service Discovery Protocol, SSDP, message.

10. The method as claimed in one of claim 5 to claim 9, further comprising:
performing a discovery process on network to identify the first device (6)
wherein the second device (4, 8, 10, 24) transmits a message to the first device (6) based on the discovery process.

11. The method as claimed in one of claim 5 to claim 10, further comprising:
transmitting, from the first device (6), a discovery message (58),
wherein the discovery message (58) is transmitted before the message is transmitted.

12. The method as claimed in claim 11, wherein the discovery message (58) identifies network location information of the first device (6).

13. The method as claimed in claim 12, wherein the network location information of the first device (6) includes a document in XML format.

14. The method as claimed in one of claim 5 to claim 13, wherein the second device and the first device (6) are connected to a local network and a remote device is tiling remote from the local network, the method further comprising:
establishing (116) a connection between the second device (8) and the remote device (24);
receiving (118) the message at the second device (8);
responsive (120) to the receiving, retrieving using the second device (8) the computer readable instructions from the first device (6);
transmitting (130) the computer readable instructions from the second device (8) to the remote device (24);
and using (134), by the remote device (24), the computer readable instructions to present the user interface at the remote device, wherein instead of enabling the second device to display at least the part of the user interface and using them by the second device to transmit the at least one control message, the computer readable instructions enable the remote device (24) to display at least the part of the user interface and are used transmit by the remote device (24) the at least one control message.

15. A computer-readable storage medium having computer readable instructions stored thereon, the computer readable instructions being executable by a first device and a second device to cause the first device and the second device to perform the method of any one of claims 5 to 13.

## Patentansprüche

1. Verfahren zum Anzeigen einer Benutzerschnittstelle einer ersten Vorrichtung (6) auf einer zweiten Vorrichtung (4, 8, 10, 24), wobei das Verfahren umfasst:
das Empfangen einer Nachricht, die mindestens Informationen enthält, die computerlesbare Anweisungen (30, 32) identifizieren, die in der ersten Vorrichtung (6) gespeichert sind, von der ersten Vorrichtung (6) durch die zweite Vorrichtung (4, 8, 10, 24) ;
das Herunterladen (70, 72) der computerlesbaren Anweisungen (30, 32) der ersten Vorrichtung (6) von der ersten Vorrichtung (6) durch die zweite Vorrichtung (4, 8, 10, 24) auf Grundlage der empfangenen Nachricht; und
das Anzeigen (74) mindestens eines Teils einer Benutzerschnittstelle der ersten Vorrichtung (6) auf der zweiten Vorrichtung (4, 8, 10, 24), bestimmt durch die heruntergeladenen computerlesbaren Anweisungen (30, 32);
**dadurch gekennzeichnet, dass**
die Nachricht als Reaktion auf eine Änderung in einem Betriebszustand der ersten Vorrichtung (6) empfangen wird, wobei die Betriebszustandsänderung ein geplantes Einschalten oder ein geplantes Ausschalten umfasst; und
die computerlesbaren Anweisungen dafür verwendet werden, mindestens eine Steuernachricht von der zweiten Vorrichtung (4, 8, 10, 24) an die erste Vorrichtung (6) zu übermitteln.

2. Verfahren nach Anspruch 1, wobei die Nachricht Informationen eines identifizierten Ortes eines Netzwerks umfasst, an dem die computerlesbaren Anweisungen von der zweiten Vorrichtung (4, 8, 10, 24) gesucht werden.

3. Verfahren nach Anspruch 1 oder Anspruch 2, wobei die computerlesbaren Anweisungen eine Anwendung (32) enthalten, die in der zweiten Vorrichtung (4, 8, 10, 24) ausführbar ist.

4. Verfahren nach einem der Ansprüche 1 bis 3, das ferner umfasst:
das Empfangen einer ersten Nachricht;
wenn die erste Nachricht empfangen wird, das Anzeigen einer Eingabeaufforderung zum Erhalten eines Benutzerbefehls zum Suchen der computerlesbaren Anweisungen; und
das Suchen computerlesbarer Anweisungen bezüglich der ersten Nachricht und einer folgenden Nachricht.

5. Verfahren zum Übermitteln einer Benutzerschnittstelle einer ersten Vorrichtung (6) an eine zweite Vorrichtung (4, 8, 10, 24), die die Benutzerschnittstelle in der zweiten Vorrichtung (4, 8, 10, 24) anzeigt,
wobei das Verfahren umfasst:
das Erfassen (65) einer Änderung in einem Betriebszustand in der ersten Vorrichtung (6) durch die erste Vorrichtung (6); und
das Übermitteln (66) einer Nachricht, die mindestens Informationen enthält, die computerlesbare Anweisungen (30, 32) identifizieren, die in der ersten Vorrichtung (6) gespeichert sind, an die zweite Vorrichtung (4, 8, 10, 24) durch die erste Vorrichtung (6) als Reaktion auf das Erfassen der Änderung in dem Betriebszustand; und
das Übermitteln (72) der computerlesbaren Anweisungen (30, 32) an die zweite Vorrichtung (4, 8, 10, 24) durch die erste Vorrichtung (6), wobei es die computerlesbaren Anweisungen (30, 32) ermöglichen, dass die zweite Vorrichtung (4, 8, 10, 24) mindestens einen Teil der Benutzerschnittstelle der ersten Vorrichtung anzeigt;
**dadurch gekennzeichnet, dass**
die erfasste Änderung des Betriebszustands ein geplantes Einschalten oder ein geplantes Ausschalten umfasst,
die computerlesbaren Anweisungen dafür verwendet werden, mindestens eine Steuernachricht von der zweiten Vorrichtung (4, 8, 10, 24) an die erste Vorrichtung (6) zu übermitteln, und
die Steuernachricht dafür konfiguriert ist, den Betriebszustand der ersten Vorrichtung (6) zu ändern.

6. Verfahren nach Anspruch 5, wobei die computerlesbaren Anweisungen auf Grundlage des Betriebszustands der ersten Vorrichtung (6) festgelegt werden.

7. Verfahren nach Anspruch 5 oder Anspruch 6, wobei die erste Vorrichtung (6) dafür eingerichtet ist, als ein Server im Netzwerk zu wirken, und die computerlesbaren Anweisungen die zweite Vorrichtung (4, 8, 10, 24) als einen Client einrichten.

8. Verfahren nach einem der Ansprüche 5 bis 7, wobei die Nachricht von der ersten Vorrichtung (6) mittels Multicast übermittelt wird.

9. Verfahren nach einem der Ansprüche 5 bis 8, wobei die Nachricht als eine SSDP-(Simple Service Discovery Protocol)-Nachricht übermittelt wird.

10. Verfahren nach einem der Ansprüche 5 bis 9, das ferner umfasst:
das Durchführen eines Auffindungsprozesses im Netzwerk zum Identifizieren der ersten Vorrichtung (6),
wobei die zweite Vorrichtung (4, 8, 10, 24) eine Nachricht auf Grundlage des Auffindungsprozesses an die erste Vorrichtung (6) übermittelt.

11. Verfahren nach einem der Ansprüche 5 bis 10, das ferner umfasst:
das Übermitteln einer Auffindungsnachricht (58) von der ersten Vorrichtung (6),
wobei die Auffindungsnachricht (58) übermittelt wird, bevor die Nachricht übermittelt wird.

12. Verfahren nach Anspruch 11, wobei die Auffindungsnachricht (58) Netzwerkortsinformationen der ersten Vorrichtung (6) identifiziert.

13. Verfahren nach Anspruch 12, wobei die Netzwerkortsinformationen der ersten Vorrichtung (6) ein Dokument im XML-Format umfassen.

14. Verfahren nach einem der Ansprüche 5 bis 13, wobei die zweite Vorrichtung und die erste Vorrichtung (6) mit einem lokalen Netzwerk verbunden sind und eine entfernte Vorrichtung von dem lokalen Netzwerk entfernt ist, wobei das Verfahren ferner umfasst:
das Herstellen (116) einer Verbindung zwischen der zweiten Vorrichtung (8) und der entfernten Vorrichtung (24);
das Empfangen (118) der Nachricht an der zweiten Vorrichtung (8);
als Reaktion (120) auf das Empfangen das Abrufen der computerlesbaren Anweisungen aus der ersten Vorrichtung (6) unter Verwendung der zweiten Vorrichtung (8);
das Übermitteln (130) der computerlesbaren Anweisungen von der zweiten Vorrichtung (8) an die entfernte Vorrichtung (24); und
das Verwenden (134) der computerlesbaren Anweisungen durch die entfernte Vorrichtung (24), um die Benutzerschnittstelle an der entfernten Vorrichtung zu präsentieren, wobei, statt zu ermöglichen, dass die zweite Vorrichtung mindestens den Teil der Benutzerschnittstelle anzeigt, und anstatt dass sie durch die zweite Vorrichtung dafür verwendet werden, die mindestens eine Steuernachricht zu übermitteln, die computerlesbaren Anweisungen ermöglichen, dass die entfernte Vorrichtung (24) mindestens den Teil der Benutzerschnittstelle anzeigt, und dafür verwendet werden, die mindestens eine Steuernachricht durch die entfernte Vorrichtung (24) zu übermitteln.

15. Computerlesbares Speichermedium mit darauf gespeicherten computerlesbaren Anweisungen, wobei die computerlesbaren Anweisungen von einer ersten Vorrichtung und einer zweiten Vorrichtung ausgeführt werden können, um zu bewirken, dass die erste Vorrichtung und die zweite Vorrichtung das Verfahren nach einem der Ansprüche 5 bis 13 ausführen.

## Revendications

1. Procédé permettant d'afficher une interface utilisateur d'un premier dispositif (6) sur un deuxième dispositif (4, 8, 10, 24), le procédé comprenant :
la réception, par le deuxième dispositif (4, 8, 10, 24) depuis le premier dispositif (6), d'un message contenant au moins des informations qui identifient des instructions lisibles par ordinateur (30, 32) stockées sur le premier dispositif (6) ;
le téléchargement (70, 72), par le deuxième dispositif (4, 8, 10, 24) depuis le premier dispositif (6), des instructions lisibles par ordinateur (30, 32) du premier dispositif (6) sur la base du message reçu ; et
l'affichage (74), sur le deuxième dispositif (4, 8, 10, 24), d'au moins une partie d'une interface utilisateur du premier dispositif (6) déterminée par les instructions lisibles par ordinateur (30, 32) téléchargées ;
**caractérisé en ce que**
le message est reçu en réponse à un changement d'un état de fonctionnement du premier dispositif (6), le changement d'état de fonctionnement comprenant une mise sous tension planifiée ou une mise hors tension planifiée ; et
les instructions lisibles par ordinateur sont utilisées pour transmettre au moins un message de commande du deuxième dispositif (4, 8, 10, 24) au premier dispositif (6).

2. Procédé selon la revendication 1, dans lequel le message comprend des informations d'une localisation identifiée d'un réseau où une recherche dans les instructions lisibles par ordinateur est effectuée par le deuxième dispositif (4, 8, 10, 24).

3. Procédé selon la revendication 1 ou 2, dans lequel les instructions lisibles par ordinateur comprennent une application (32) qui est exécutable dans le deuxième dispositif (4, 8, 10, 24).

4. Procédé selon l'une quelconque des revendications 1 à 3, comprenant en outre :
la réception d'un premier message ;
lorsque le premier message est reçu, l'affichage d'une invite pour recevoir un ordre de l'utilisateur pour rechercher dans les instructions lisibles par ordinateur ; et
la recherche dans les instructions lisibles par ordinateur concernant le premier message et un message suivant.

5. Procédé permettant de transmettre une interface utilisateur d'un premier dispositif (6) à un deuxième dispositif (4, 8, 10, 24) qui affiche l'interface utilisateur dans le deuxième dispositif (4, 8, 10, 24), le procédé comprenant :
la détection (65), par le premier dispositif (6), d'un changement d'un état de fonctionnement du premier dispositif (6) ; et
la transmission (66), par le premier dispositif (6) au deuxième dispositif (4, 8, 10, 24), d'un message contenant au moins des informations qui identifient des instructions lisibles par ordinateur (30, 32) stockées sur le premier dispositif (6) en réponse à la détection du changement de l'état de fonctionnement ; et
la transmission (72), par le premier dispositif (6), des instructions lisibles par ordinateur (30, 32) au deuxième dispositif (4, 8, 10, 24), les instructions lisibles par ordinateur (30, 32) permettant au deuxième dispositif (4, 8, 10, 24) d'afficher au moins une partie de l'interface utilisateur du premier dispositif ;
**caractérisé en ce que**
le changement détecté de l'état de fonctionnement comprend une mise sous tension planifiée ou une mise hors tension planifiée,
les instructions lisibles par ordinateur sont utilisées pour transmettre au moins un message de commande du deuxième dispositif (4, 8, 10, 24) au premier dispositif (6), et
le message de commande est configuré pour changer l'état de fonctionnement du premier dispositif (6).

6. Procédé selon la revendication 5, dans lequel les instructions lisibles par ordinateur sont réglées sur la base de l'état de fonctionnement du premier dispositif (6).

7. Procédé selon la revendication 5 ou 6, dans lequel le premier dispositif (6) est réglé pour fonctionner comme un serveur sur un réseau, et les instructions lisibles par ordinateur règlent le deuxième dispositif (4, 8, 10, 24) comme un client.

8. Procédé selon l'une quelconque des revendications 5 à 7, dans lequel le message est multidiffusé par le premier dispositif (6).

9. Procédé selon l'une quelconque des revendications 5 à 8, dans lequel le message est transmis comme un message d'un protocole simple de découverte de services, SSDP.

10. Procédé selon l'une quelconque des revendications 5 à 9, comprenant en outre :
l'exécution d'un processus de découverte sur un réseau pour identifier le premier dispositif (6), le deuxième dispositif (4, 8, 10, 24) transmettant un message au premier dispositif (6) sur la base du processus de découverte.

11. Procédé selon l'une quelconque des revendications 5 à 10, comprenant en outre :
la transmission, depuis le premier dispositif (6) d'un message de découverte (58), le message de découverte (58) étant transmis avant que le message ne soit transmis.

12. Procédé selon la revendication 11, dans lequel le message de découverte (58) identifie des informations de localisation de réseau du premier dispositif (6).

13. Procédé selon la revendication 12, dans lequel les informations de localisation de réseau du premier dispositif (6) comprennent un document au format XML.

14. Procédé selon l'une quelconque des revendications 5 à 13, dans lequel le deuxième dispositif et le premier dispositif (6) sont connectés à un réseau local, et un dispositif distant est éloigné du réseau local, le procédé comprenant en outre :
l'établissement (116) d'une connexion entre le deuxième dispositif (8) et le dispositif distant (24) ;
la réception (118) du message sur le deuxième dispositif (8) ;
en réponse (120) à la réception, la récupération, à l'aide du deuxième dispositif (8), des instructions lisibles par ordinateur provenant du premier dispositif (6) ;
la transmission (130) des instructions lisibles par ordinateur du deuxième dispositif (8) au dispositif distant (24) ; et
l'utilisation (134), par le dispositif distant (24), des instructions lisibles par ordinateur pour présenter l'interface utilisateur sur le dispositif distant, dans lequel, au lieu de permettre au deuxième dispositif d'afficher au moins la partie de l'interface utilisateur et d'être utilisées par le deuxième dispositif pour transmettre ledit au moins un message de commande, les instructions lisibles par ordinateur permettent au dispositif distant (24) d'afficher au moins la partie de l'interface utilisateur et sont utilisées pour transmettre, par le dispositif distant (24), ledit au moins un message de commande.

15. Support de stockage lisible par ordinateur sur lequel sont stockées des instructions lisibles par ordinateur, les instructions lisibles par ordinateur pouvant être exécutées par un premier dispositif et un deuxième dispositif pour amener le premier dispositif et le deuxième dispositif à effectuer le procédé selon l'une quelconque des revendications 5 à 13.
